# EUROPÄISCHE PATENTSCHRIFT

(11) **EP 0 713 795 B1**
(45) Veröffentlichungstag und Bekanntmachung des Hinweises auf die Patenterteilung: **04.11.1998**
(21) Anmeldenummer: 95114928.5
(22) Anmeldetag: 22.09.1995
(51) Int. Cl.: B60J 7/12

(54) **Faltverdeck für ein Fahrzeug**
Foldable top for vehicle
Capote pliante pour véhicule

(30) Priorität: 23.11.1994 DE 4441666
(43) Veröffentlichungstag der Anmeldung: 29.05.1996
(73) Patentinhaber: Dr.Ing.h.c. F. Porsche Aktiengesellschaft, 70435 Stuttgart (DE)
(72) Erfinder: Aydt, Matthias, D-71735 Eberdingen (DE); Pfertner, Kurt, D-71299 Wimsheim (DE); Thomas, Peter, D-75233 Tiefenbronn (DE)

(56) Entgegenhaltungen:
- EP-A- 0 521 307
- DE-U- 9 315 758
- US-A- 3 297 357

## Beschreibung

Die Erfindung bezieht sich auf ein Faltverdeck für ein Fahrzeug gemäß dem Oberbegriff des Patentanspruches 1.

Aus dem DE-GM 93 15 758 geht ein Faltverdeck für ein Fahrzeug mit einem etwa U-förmigen vorderen Verdeckabschnitt hervor, der an beiden Längsseiten über hintere Dachrahmenteile und Hauptsäulen sowie zusätzliche Lenker an den Verdecklagern abgestützt ist. Ferner umfaßt das Verdeckgestell mehrere querverlaufende Spriegel.

Dieser Anordnung haftet der Nachteil an, daß durch die dreiteilige Ausbildung des seitlichen Dachrahmens ein ungünstiger Verlauf für die Dichtung gegeben ist und daß das Verdeck durch die Vielzahl der Bauteile des Verdeckgestells und der Drehpunkte sowie mehrerer querverlaufender Spriegel einen aufwendigen Aufbau aufweist.

Bedingt durch die U-förmige Ausbildung des vorderen Verdeckabschnitts liegt der äußere Verdeckbezug nur abschnittsweise an diesem auf und der U-förmige Verdeckabschnitt weist in sich eine relativ geringe Stabilität auf.

Aufgabe der Erfindung ist es, an einem Faltverdeck solche Vorkehrungen zu treffen, daß es bei einem einfachen Aufbau eine hohe Stabilität (Verdrehsteifigkeit) aufweist und daß ein günstiger Dichtungsverlauf im seitlichen Bereich erzielt wird.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß der annähernd plattenförmig ausgebildete formsteife Verdeckabschnitt über einen einteilig ausgebildeten B-Säulenlenker unmittelbar am Verdecklager abgestützt ist, wodurch das Verdeck bei einfachem Aufbau eine hohe Stabilität aufweist und ein günstiger Dichtungsverlauf im seitlichen Bereich erzielt wird.

Ferner ist aufgrund der zweiteiligen Ausbildung des seitlichen Dachrahmens ein günstiger Dichtungsverlauf mit lediglich einer Trennungsstelle gegeben. Der plattenförmige formsteife Verdeckabschnitt weist eine hohe Verdrehsteifigkeit auf und ferner ist eine großflächige Auflage des Verdeckbezugs am formsteifen Verdeckabschnitt gegeben.

Aufgrund des einteiligen B-Säulenlenkers wird die Anzahl der Gelenkverbindungen und der Bauteile reduziert. Es ist lediglich ein querverlaufender Spriegel vorgesehen, der durch den Hauptspriegel gebildet wird.

Durch die Anbindung des Hauptlenkers über den unteren Lenkhebel an den Hauptspriegel wird erreicht, daß sich der Verdeckbezug beim Zurückklappen des Verdecks zwischen formsteifem Verdeckabschnitt und Hauptspriegel nicht überdehnt.

Der am Hauptspriegel schwenkbar gelagerte heckseitige Spannspriegel ist mittels einer Arretiereinrichtung in seiner etwa horizontalen Wirkstellung und in einer den Zugang zum Antriebsaggregat ermöglichenden etwa vertikalen Montagestellung festlegbar.

Bei zurückgeschwenktem Verdeck bildet der vordere Verdeckabschnitt zumindest abschnittsweise eine dem Verdeckkastendeckel vorgelagerte Abdeckung.

Ein Ausführungsbeispiel der Erfindung ist in der Zeichnung dargestellt und wird im folgenden näher erläutert:

Es zeigt
- Fig. 1: eine perspektivische Teilansicht von schräg hinten auf ein Fahrzeug mit einem Verdeck in geschlossener Stellung,
- Fig. 2: eine Seitenansicht auf das Verdeckgestell in Schließ- und zurückgeklappter Stellung,
- Fig. 3: eine Seitenansicht auf das Verdeckgestell in einer zurückgeklappten Zwischenstellung,
- Fig. 4: eine Seitenansicht auf das Verdeckgestell in vollständig zurückgeklappter Stellung,
- Fig. 5: eine Draufsicht auf die zurückgeklappte Stellung des Verdecks und des angrenzenden Aufbaus,
- Fig. 6: die wesentlichen Einzelteile des Verdeckgestells in Explosionsdarstellung,
- Fig. 7: einen Schnitt nach der Linie VII-VII der Fig. 2 in größerem Maßstab,
- Fig. 8: einen Schnitt nach der Linie VIII-VIII der Fig. 2 in größerem Maßstab,
- Fig. 9: einen Schnitt nach der Linie IX-IX der Fig. 2 in größerem Maßstab und
- Fig. 10: einen Schnitt nach der Linie X-X der Fig. 2 in größerem Maßstab.

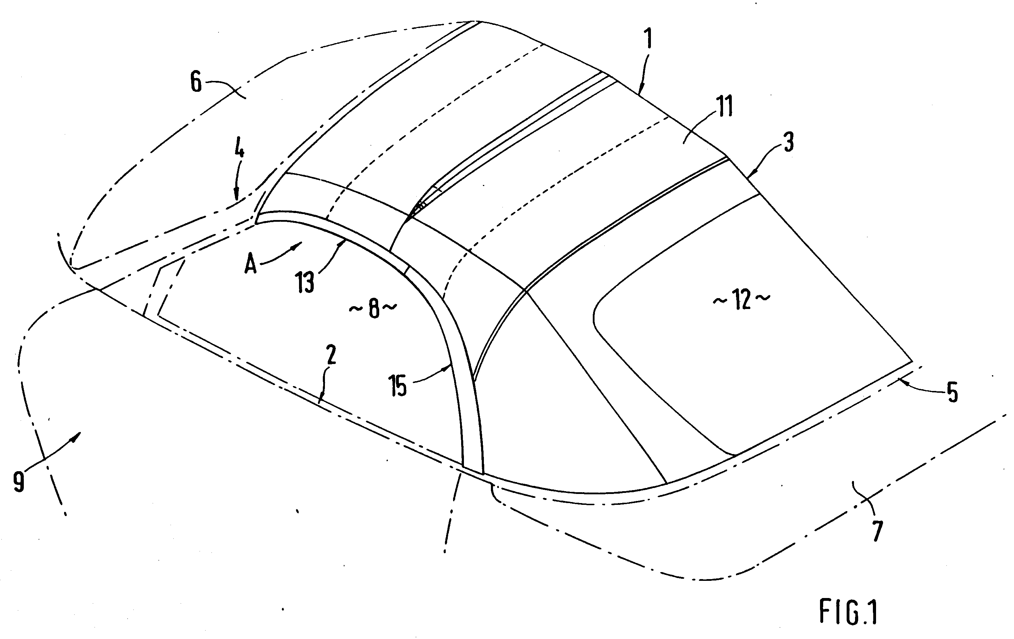

Fig. 1 zeigt einen Teilbereich eines Personenkraftwagens 1, der oberhalb einer Gürtellinie 2 ein Faltverdeck 3 aufweist. Das Faltverdeck 3 erstreckt sich in einer Schließstellung A zwischen einem Windschutzscheibenrahmen 4 und einem Heckbereich 5. Der Windschutzscheibenrahmen 4 nimmt eine Windschutzscheibe 6 auf. Im Heckbereich 5 ist ein schwenkbarer Verdeckkastendeckel 7 angeordnet. Ein Fahrgastraum 8 des zweisitzigen Personenkraftwagens 1 ist durch seitliche Türen 9 zugänglich, wobei die Türen 9 in einem dem Windschutzscheibenrahmen 4 und dem Faltverdeck 3 zugekehrten Bereich rahmenlos ausgebildet sind.

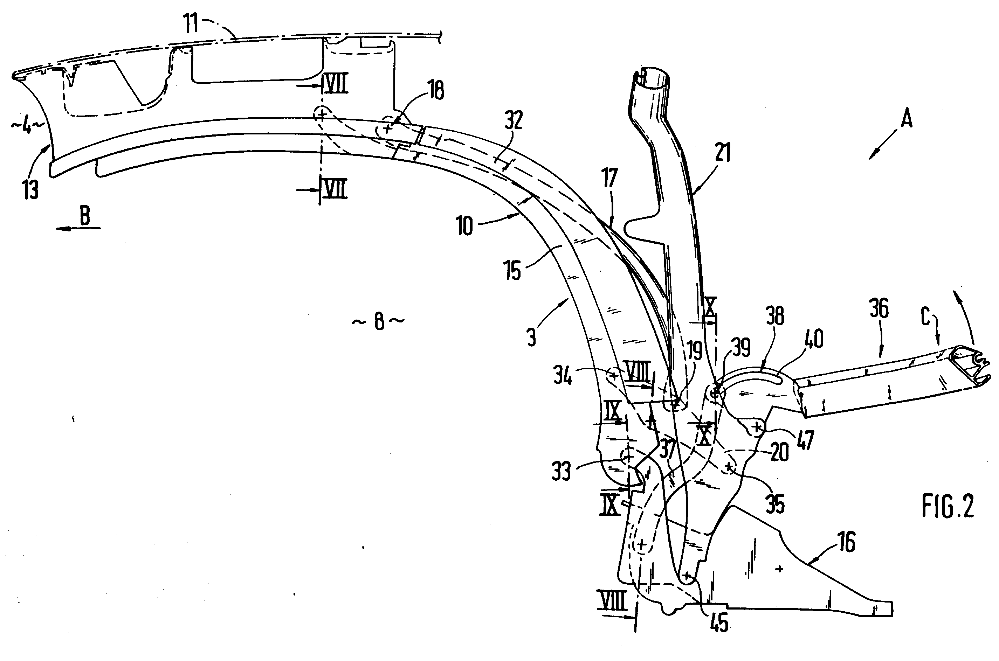

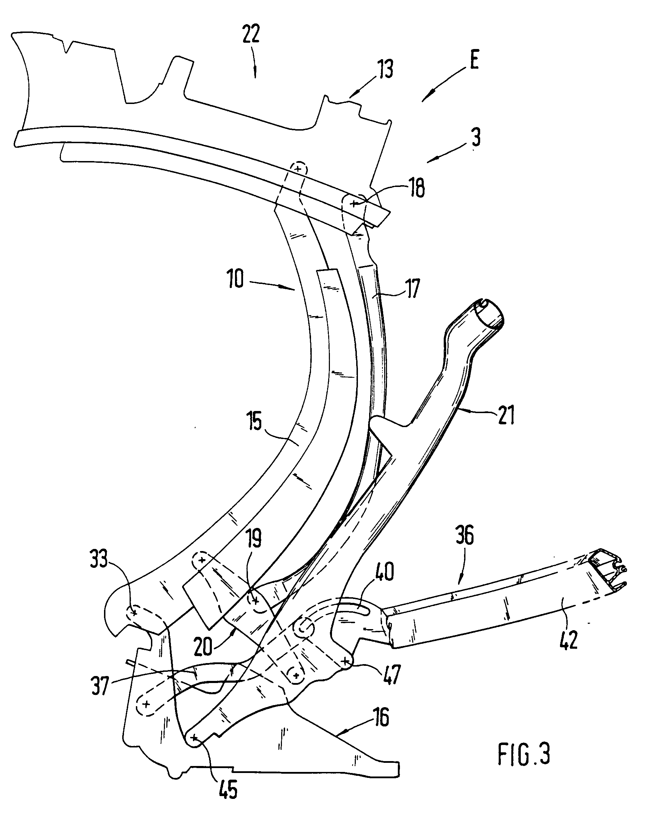

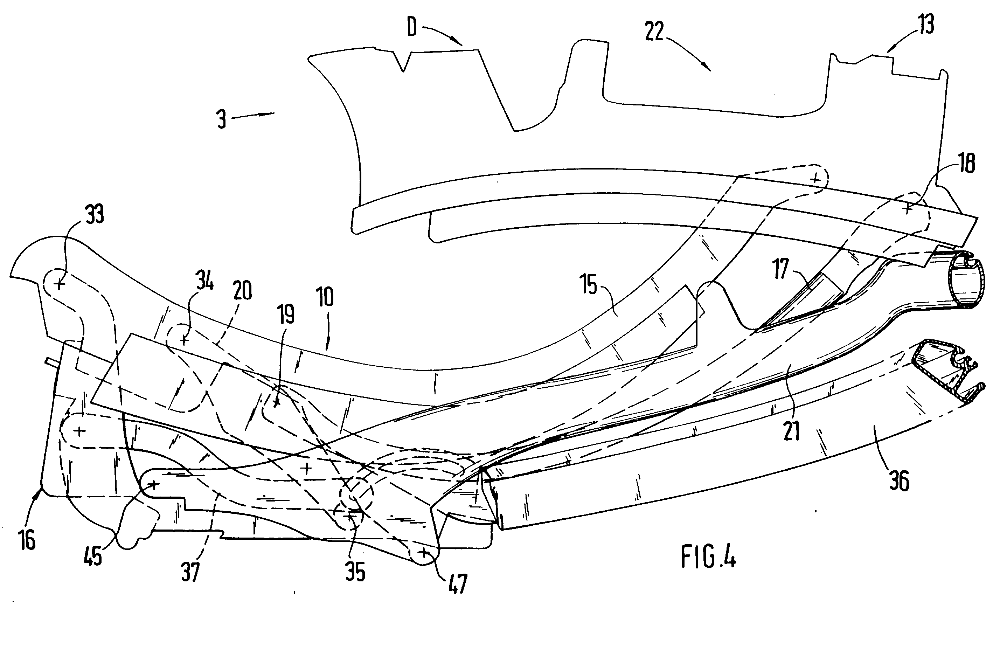

Das Faltverdeck 3 setzt sich gemäß den Fig. 2 bis 6 aus einem Verdeckgestell 10 und einem am Verdeckgestell 10 in Lage gehaltenen Verdeckbezug 11 zusammen. Im hinteren Bereich des Verdeckbezuges 11 ist eine Sichtscheibe 12 vorgesehen, die durch eine flexible oder starre Heckscheibe gebildet wird.

Das Verdeckgestell 10 umfaßt im wesentlichen einen benachbart dem Windschutzscheibenrahmen 4 angeordneten, etwa plattenförmig ausgebildeten formsteifen Verdeckabschnitt 13, der an seinen beiden Längsseiten 14 jeweils über einen einteilig ausgebildeten B-Säulenlenker 15 unmittelbar am angrenzenden Verdecklager 16 abgestützt ist. Zur Anlenkung des formsteifen Verdeckabschnitts 13 ist benachbart jedes B-Säulenlenkers 15 ein Hauptlenker 17 angeordnet. Jeder Hauptlenker 17 ist mit seinem einen Ende 18 drehbar an den vorderen Verdeckabschnitt 13 angeschlossen, wogegen das andere Ende 19 an einem unteren Lenkhebel 20 gelenkig angelenkt ist. Der untere Lenkhebel 20 verbindet den B-Säulenlenker 15 mit einem den Fahrgastraum 8 bogenförmig überspannenden dahinterliegenden Hauptspriegel 21. Der Hauptspriegel 21 ist bei 45 am Verdecklager drehbar angelenkt.

Der zumindest abschnittsweise plattenförmige vordere Verdeckabschnitt 13 wird durch ein Druckgrußteil aus einer Leichtmetallegierung (z.B. Alu- oder Magnesiumlegierung) gebildet und weist aus Gewichtsgründen eine etwa mittige Aussparung 22 auf. Es besteht jedoch auch die Möglichkeit, keine solche Aussparung 22 vorzusehen.

In der Draufsicht gesehen ist der Verdeckabschnitt 13 etwa rechteckförmig ausgebildet, wobei die Erstreckung in Querrichtung größer ist als in Längsrichtung. Der Verdeckbezug 11 ist nahezu umlaufend an den Randabschnitten des Verdeckabschnittes 13 festgelegt.

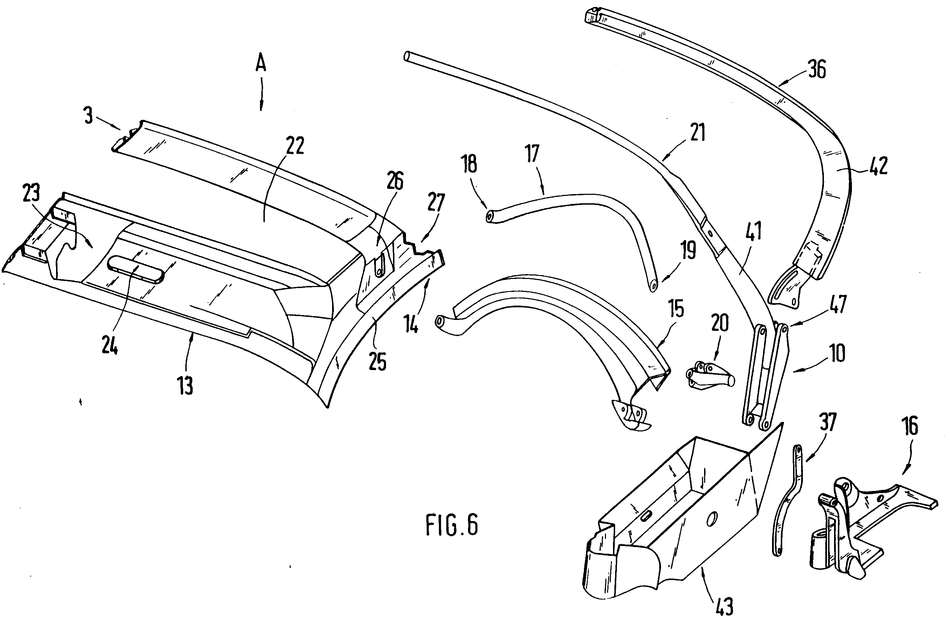

Ferner ist zumindest eine nischenförmige, nach oben hin offene Aufnahme 23 zur Unterbringung einer nicht näher dargestellten Verriegelungsvorrichtung am Verdeckabschnitt 13 ausgebildet. Diese Aufnahme 23 ist benachbart des Windschutzscheibenrahmens 4 am Verdeckabschnitt 13 vorgesehen und zwar entweder in einem mittleren Bereich der Quererstreckung (Fig. 6) oder in seitlich außenliegenden Bereichen (bei zwei Verriegelungsvorrichtungen).

Im Ausführungsbeispiel ist eine mittige Aufnahme 23 zur Unterbringung der Verriegelungsvorrichtung vorgesehen. Beiderseits der Aufnahme 23 sind am Verdeckabschnitt 13 ringförmige Öffnungen 24 ausgebildet, die als Griffschale zum Betätigen des Faltverdecks 3 dienen.

An beiden Längsseiten 14 des Verdeckabschnitts 13 sind jeweils seitliche Dachrahmenabschnitte 25 einstückig mit dem Verdeckabschnitt 13 verbunden, wobei an den integrierten Dachrahmenabschnitten 25 der Verdeckbezug 11 festgelegt ist und nicht näher dargestellte Dichtkörper montiert sind. Die Dachrahmenabschnitte 25 weisen eine profilierte Form auf.

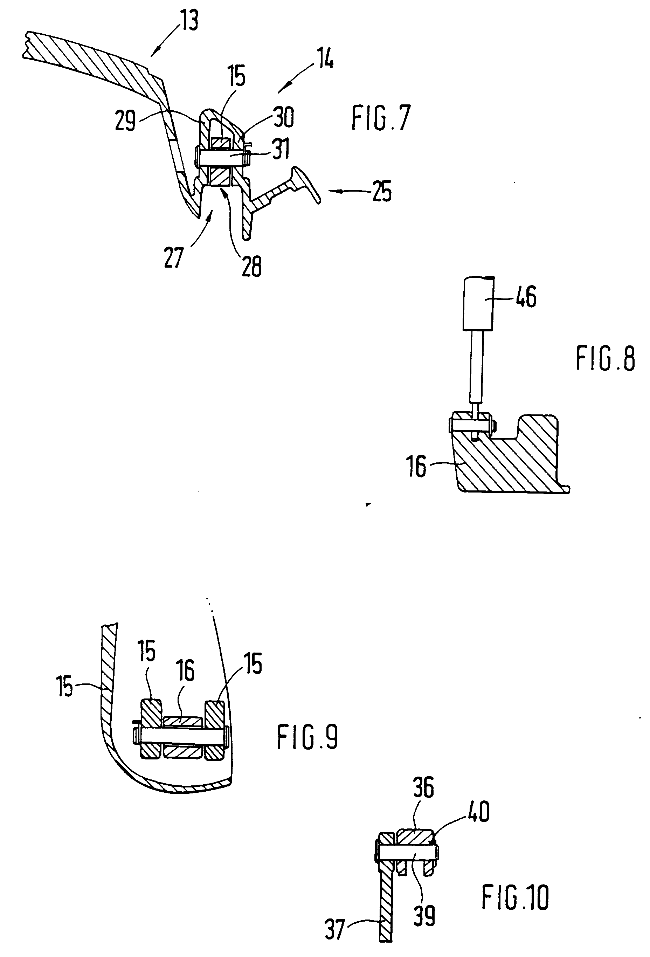

In den beiden hinteren seitlich außenliegenden Bereichen 26 des Verdeckabschnitts 13 ist jeweils eine nischenförmige nach unten hin offene Aufnahme 27 ausgebildet, wobei an der Aufnahme 27 Gabellagerungen 28 für das vordere Ende des B-Säulenlenkers 15 und des Hauptlenkers 17 ausgebildet sind (Fig. 7). Zwischen beabstandeten Wandabschnitte 29, 30 des Verdeckabschnitts 13 ist ein Endbereich des B-Säulenlenkers 15 bzw. des Hauptlenkers 17 eingeführt, wobei der mit den Endbereichen zusammenwirkende Gelenkbolzen 31 an den beabstandeten Wandabschnitten 29, 30 in Lage gehalten ist.

Die Endpunkte des B-Säulenlenkers 15 und des angrenzenden Hauptlenkers 17 bilden auf jeder Längsseite des Faltverdecks 3 ein Viergelenk.

Der Hauptlenker 17 ist - in Fahrtrichtung B gesehen - hinter dem B-Säulenlenker 15 am vorderen Verdeckabschnitt 13 drehbar angelenkt und ragt zumindest abschnittsweise in einen einseitig offenen Hohlraum 32 des B-Säulenlenkers 15 hinein.

Der untere Lenkhebel 20 ist oberhalb des unteren Anlenkpunktes 33 des B-Säulenlenkers 15 drehbar mit diesem bei 34 verbunden. Gemäß Fig. 2 weist der Lenkhebel 20 eine gebogene Form auf. Das untere Ende 35 des Lenkhebels 20 ist an den Hauptspriegel 21 angeschlossen und zwar etwa in Höhe des unteren Anlenkpunktes 33 des B-Säulenlenkers 15.

In einem mittleren Bereich der Längserstreckung des unteren Lenkhebels 20 ist das untere Ende 19 des darüberliegenden bogenförmigen Hauptlenkers 17 mit dem Lenkhebel 20 drehbar verbunden.

An beiden aufrechten Längsseiten des Hauptspriegels 21 ist oberhalb des jeweiligen Lenkhebels 20 bei 47 ein heckseitiger Spannbügel 36 schwenkbar gelagert, an dem der untere Rand des Verdeckbezugs 11 festgelegt ist. Der Spannbügel 36 steht über einen zusätzlichen Lenker 37 mit dem Verdecklager 16 in Wirkverbindung. Ferner ist eine Arretiereinrichtung 38 vorgesehen, die den Spannbügel 36 einerseits in einer etwa horizontalen Wirkstellung C und andererseits in einer etwa aufrechten, nicht näher dargestellten Montagestellung in Lage hält.

In der Montagestellung wird der Zugang zu einem unter dem Verdeckkasten liegenden, nicht näher dargestellten Antriebsaggregat ermöglicht.

Die Arretiereinrichtung 38 umfaßt einen am oberen Ende des Lenkers 37 angeordneten seitlich abstehenden Zapfen 39, der mit einer gebogenen schlitzförmigen Führungsbahn 40 des Spannbügels 36 in Wirkverbindung steht (Fig. 10).

Unterhalb der Führungsbahn 40 ist ein mit Rasten versehenes nicht näher dargestelltes Federelement vorgesehen, das mit dem Zapfen 39 zusammenwirkt und diesen in beiden Endstellungen in Lage hält.

Der vordere Verdeckabschnitt 13, die beiden B-Säulenlenker 15, die beiden Verdecklager 16 und zumindest seitliche, aufrechte Abschnitte 41 des mehrteiligen Hautspriegels 21 werden durch Druckgußteile aus einer Leichtmetallegierung (z.B. Alu- oder Magnesiumlegierung) gebildet. Der Spannbügel 36 besteht zumindest über einen wesentlichen Teil seiner Längserstreckung aus einem gebogenen Strangpreßprofil 42.

Am unteren Rand des Verdeckgestells 10 sind benachbart der Verdecklager 16 aufbauseitig in Lage gehaltene Wasserauffangbehälter 43 vorgesehen.

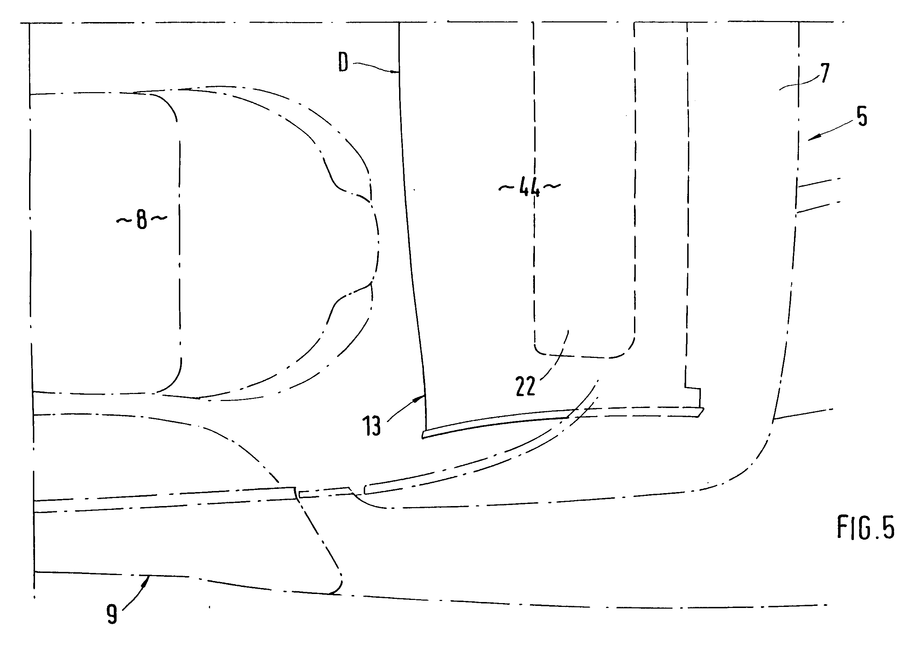

Der vordere Verdeckabschnitt 13 bildet in der zurückgeklappten Stellung D zumindest abschnittsweise eine den Verdeckkastendeckel 7 vorgelagerte Abdeckung 44 (Fig. 5).

Seitlich außenliegende Abschnitte des vorderen Verdeckabschnitts 13 und des B-Säulenlenkers 15 bilden sichtbare Außenhautabschnitte des Faltverdecks 3 (Fig. 1).

Die dem Fahrgastraum 8 zugekehrte Seite des vorderen Verdeckabschnitts 13 und des B-Säulenlenkers 15 sind so gestaltet, daß sie die sichtbare Innenseite bilden, d.h. der vordere Verdeckabschnitt 13 weist keinen Innenhimmel auf und der B-Säulenlenker 15 ist mit keiner zusätzlichen Verkleidung versehen.

## Patentansprüche

1. Faltverdeck (3) für ein Fahrzeug, insbesondere Personenkraftwagen, das von einer einen Fahrgastraum überspannenden Schließstellung in eine heckseitige Ablagestellung bewegbar ist und sich aus einem Verdeckgestell (10) und einem am Verdeckgestell (10) in Lage gehaltenenen Verdeckbezug (11) zusammensetzt, wobei das mit aufbauseitig angebrachten Verdecklagern (16) zusammenwirkende Verdeckgestell (10) einen benachbart dem Windschutzscheibenrahmen (4) verlaufenden formsteifen Verdeckabschnitt (13) umfaßt, **dadurch gekennzeichnet,** daß der annähernd plattenförmig ausgebildete formsteife Verdeckabschnitt (13) an seinen beiden Längsseiten (14) jeweils über einen einteilig ausgebildeten B-Säulenlenker (15) unmittelbar am angrenzenden Verdecklager (16) abgestützt ist und daß zur Anlenkung des formsteifen Verdeckabschnitts (13) benachbart jedes B-Säulenlenkers (15) ein Hauptlenker (17) angeordnet ist, dessen eines Ende (18) an den vorderen Verdeckabschnitt (13) und dessen anderes Ende (19) an einen unteren Lenkhebel (20) drehbar angeschlossen ist, wobei jeder untere Lenkhebel (20) den B-Säulenlenker (15) mit einem dem Fahrgastraum (8) bogenförmig überspannenden dahinterliegenden Hauptspriegel (21) verbindet.

2. Faltverdeck nach Anspruch 1, **dadurch gekennzeichnet,** daß in einem hintenliegenden, seitlich außenliegenden Bereich an beiden Längsseiten (14) des vorderen Verdeckabschnitts (13) nischenförmige, nach unten hin offene Aufnahmen (27) ausgebildet sind, in die Endbereiche des B-Säulenlenkers (15) und des Hauptlenkers (17) hineinragen und über Gelenkbolzen (31) mit dem vorderen Verdeckabschnitt (13) drehbar verbunden sind.

3. Faltverdeck nach Anspruch 1, **dadurch gekennzeichnet,** daß der Hauptlenker (17) - in Fahrtrichtung gesehen - hinter dem B-Säulenlenker (15) am vorderen Verdeckabschnitt (13) drehbar angelenkt ist.

4. Faltverdeck nach den Ansprüchen 1 bis 3, **dadurch gekennzeichnet,** daß der Hauptlenker (17) zumindest abschnittsweise in einen einseitig offenen Hohlraum (32) des B-Säulenlenkers (15) hineinragt.

5. Faltverdeck nach Anspruch 1, **dadurch gekennzeichnet,** daß am unteren Lenkhebel (20) benachbart des Anlenkpunktes des Hauptlenkers (17) eine Gasfeder (46) angreift, deren anderes Ende am darunterliegenden Verdecklager (16) festgelegt ist.

6. Faltverdeck nach einem oder mehreren der vorangegangenen Ansprüche, **dadurch gekennzeichnet,** daß an dem am Verdecklager (16) drehbar angelenkten Hauptspriegel (21) ein heckseitiger Spannbügel (36) schwenkbar gelagert ist.

7. Faltverdeck nach Anspruch 6, **dadurch gekennzeichnet,** daß der Spannbügel (36) an jeder Längsseite über einen Lenker (37) mit dem Verdecklager (16) in Wirkverbindung steht.

8. Faltverdeck nach den Ansprüchen 6 und 7, **dadurch gekennzeichnet,** daß der Spannbügel (36) mittels einer Arretiereinrichtung (38) in einer Wirkstellung C und in einer hochgeschwenkten Montagestellung festlegbar ist.

9. Faltverdeck nach den Ansprüchen 7 und 8, **dadurch gekennzeichnet,** daß die Arretiereinrichtung (38) ein am oberen Ende des Lenkers (37) angeordneten seitlich abstehenden Zapfen (39) umfaßt, der mit einer schlitzförmigen Führungsbahn (40) des Spannbügels (36) in Wirkverbindung steht und daß ferner ein mit endseitigen Rasten versehenenes Federelement vorgesehen ist, das mit dem Zapfen (39) zusammenwirkt und diese in den beiden Endstellungen in Lage hält.

10. Faltverdeck nach einem oder mehreren der vorangegangenen Ansprüche, **dadurch gekennzeichnet,** daß der vordere Verdeckabschnitt (13) mit den integrierten seitlichen Dachrahmenabschnitten (25), die beiden B-Säulenlenker (15), die Verdecklager (16) und zumindest seitliche aufrechte Abschnitte (41) des Hauptspriegels (21) durch Druckgußteile aus einer Leichtmetallegierung gebildet werden.

11. Faltverdeck für einen Personenenwagen, der im Heckbereich einen Verdeckkasten zur Aufnahme des Verdecks und einen Verdeckkastendeckel aufweist, **dadurch gekennzeichnet,** daß der Verdeckkastendeckel (7) lediglich einen hinteren Bereich des Verdeckkastens nach oben hin abdeckt und daß bei zurückgeklapptem Faltverdeck (3) der vom Verdeckbezug (11) verkleidete vordere Verdeckabschnitt (13) abschnittsweise einen vor dem Verdeckkastendeckel (7) liegenden Teilbereich des Verdeckkastens nach oben hin abdeckt.

## Claims

1. A folding top (3) for a vehicle, in particular a passenger car, which is movable from a closed position covering a passenger compartment into a fold-down position at the rear and is formed by a folding-top frame (10) and a folding-top cover (11) held in position on the folding-top frame (10), wherein the folding-top frame (10) cooperating with folding-top bearings (16) mounted on the body comprises a dimensionally rigid folding-top portion (13) extending adjacent to the windscreen frame (4), **characterized in that** the dimensionally rigid folding-top portion (13) formed substantially in the manner of a plate is supported at the two longitudinal sides (14) thereof directly on the adjacent folding-top bearing (16) by way of one respective B-column control arm (15) formed integrally in each case, and in order to link the dimensionally rigid folding-top portion (13) a main control arm (17) is arranged adjacent to each B-column control arm (15), one end (18) of the main control arm (17) being rotatably attached to the front folding-top portion (13) and the other end (19) thereof being rotatably attached to a lower steering lever (20), wherein each lower steering lever (20) connects the B-column control arm (15) to a main bow (21) situated therebehind and covering the passenger compartment (8) in the shape of a curve.

2. A folding top according to Claim 1, **characterized in that** pocket-shaped receiving means (27) open at the bottom are formed in an area situated laterally on the outside and at the rear on the two longitudinal sides (14) of the front folding-top portion (13), end areas of the B-column control arm (15) and of the main bow (17) projecting into the said receiving means (27) and being rotatably connected to the front folding-top portion (13) by way of hinge pins (31).

3. A folding top according to Claim 1, **characterized in that** the main control arm (17) is articulated to the front folding-top portion (13) behind the B-column control arm (15) as viewed in the direction of travel.

4. A folding top according to Claims 1 to 3, **characterized in that** the main control arm (17) projects at least in part into a cavity (32) - open on one side - in the B-column control arm (15).

5. A folding top according to Claim 1, **characterized in that** a gas spring (46) engages on the lower control lever (20) adjacent to the articulation point of the main control arm (17), and its other end is secured to the folding-top bearing (16) situated thereunder.

6. A folding top according to one or more of the preceding Claims, **characterized in that** a rear tensioning bracket (36) is pivotably mounted on the main bow (21) articulated to the folding-top bearing (16).

7. A folding top according to Claim 6, **characterized in that** the tensioning bracket (36) is operatively connected to the folding-top bearing (16) by way of a control arm (37) on each longitudinal side.

8. A folding top according to Claims 6 and 7, **characterized in that** the tensioning bracket (36) can be secured by means of a locking device (38) in an operative position **C** and in a raised assembly position.

9. A folding top according to Claims 7 and 8, **characterized in that** the locking device (38) comprises a laterally projecting pin (39) which is arranged at the upper end of the control arm (37) and which is operatively connected to a slot-shaped guide path (40) of the tensioning bracket (36), and, in addition, a spring member is provided which has catches at its end and which cooperates with the pin (39) and holds it in position in the two end positions.

10. A folding top according to one or more of the preceding Claims, **characterized in that** the front folding-top portion (13) with the integrated lateral roof-frame portions (25), the two B-column control arms (15), the folding-top bearings (16) and at least lateral vertical portions (41) of the main bow (21) are formed by die-cast parts of a light-metal alloy.

11. A folding top for a passenger car, which is provided in the tail area with a folding-top box for receiving the folding top and a lid for the folding-top box, **characterized in that** the lid (7) of the folding-top box covers only a rear area of the folding-top box at the top, and, when the folding top (3) is folded back, the front folding-top portion (13) covered by the folding-top cover (11) covers in part - towards the top - a partial area of the folding-top box situated in front of the lid (7) of the folding-top box.

## Revendications

1. Capote pliante (3) pour un véhicule, en particulier une voiture de tourisme, qui est déplaçable à partir d'une position de fermeture recouvrant un habitacle dans une position de rangement arrière et qui se compose d'un bâti (10) et d'un revêtement (11), maintenu en position sur le bâti (10), le bâti (10) coopérant avec des paliers (16) de la capote montés côté carrosserie, comprenant une partie de capote (13) indéformable, s'étendant au voisinage du cadre (4) du pare-brise, caractérisée en ce que la partie de capote (13) rigide, réalisée approximativement en forme de plaque, est soutenue, sur chacun de ses deux côtés longitudinaux (14), par un bras oscillant de montant B (15), réalisé d'une seule pièce, directement sur le palier (16) adjacent de la capote et en ce que pour l'articulation de la partie de capote (13) rigide, il est prévu, au voisinage de chaque bras oscillant de montant B (15), un bras oscillant principal (17), dont une extrémité (18) est raccordée tournante à la partie de capote (13) avant et dont l'autre extrémité (19) est raccordée tournante à un levier de commande (20) inférieur, chaque levier de commande (20) inférieur reliant le bras oscillant de montant B (15) avec un arceau principal (21) situé derrière, recouvrant en arc l'habitacle (8).

2. Capote pliante selon la revendication 1, caractérisée en ce que dans une zone située à l'arrière, latéralement à l'extérieur, sont formés sur les deux côtés longitudinaux (14) de la partie de capote (13) avant, des logements (17) en forme de niche, ouverts vers le bas, dans lesquels pénètrent des zones d'extrémité du bras oscillant de montant B (15) et du bras oscillant principal (17) et qui sont reliés de manière à pouvoir tourner avec la partie de capote (13) avant, par des axes d'articulation (31).

3. Capote pliante selon la revendication 1, caractérisée en ce que le bras oscillant principal (17) s'articule tournant derrière - vu dans le sens de marche - le bras oscillant de montant b (15), sur la partie de capote (13) avant.

4. Capote pliante selon les revendications 1 à 3, caractérisée en ce que le bras oscillant principal (17) pénètre au moins en partie dans une cavité (32) ouverte d'un côté du bras oscillant de montant B (15).

5. Capote pliante selon la revendication 1, caractérisée en ce que sur le levier de commande (20) inférieur, au voisinage du point d'articulation du bras oscillant principal (17), agit un ressort à gaz (46), dont l'autre extrémité est fixée sur le palier de capote (16) situé au-dessous.

6. Capote pliante selon une ou plusieurs des revendications précédentes, caractérisée en ce qu'un étrier de serrage (36) arrière est monté pivotant sur l'arceau principal (21), articulé tournant sur le palier de capote (16).

7. Capote pliante selon la revendication 6, caractérisée en ce que l'étrier de serrage (36) est en liaison active sur chaque côté longitudinal, avec le palier de capote (16), par l'intermédiaire d'un bras oscillant (37).

8. Capote pliante selon les revendications 6 et 7, caractérisée en ce que l'étrier de serrage (36) peut être fixé, au moyen d'un dispositif d'arrêt (38), dans une position active C et dans une position de montage pivotée vers le haut.

9. Capote pliante selon les revendications 7 et 8, caractérisée en ce que le dispositif d'arrêt (38) comprend un tenon (39) faisant saillie latéralement, disposé à l'extrémité supérieure du bras oscillant (37), lequel tenon est en liaison active avec une piste de guidage (40) en forme de fente, de l'étrier de serrage (36), et en ce qu'en outre est prévu un élément à ressort, pourvu de crans terminaux, qui coopère avec le tenon (39) et immobilise celui-ci dans les deux positions de fin de course.

10. Capote pliante selon une ou plusieurs des revendications précédentes, caractérisée en ce que la partie de capote (13) avant avec les parties de cadre de toit (25) latérales, intégrées, les deux bras oscillants de montant B (15), les paliers de capote (16) et au moins des parties (41) verticales, latérales, de l'arceau principal (21) sont formés par des éléments moulés sous pression dans un alliage de métaux légers.

11. Capote pliante pour une voiture de tourisme, qui comporte à l'arrière un coffret destiné à recevoir la capote et un couvercle de coffret, caractérisée en ce que le couvercle (7) du coffret de la capote recouvre uniquement vers le haut une zone arrière du coffret de la capote et en ce que lorsque la capote (3) est repliée, la partie de capote (13) avant doublée du revêtement de capote (11), recouvre par endroits une zone partielle du coffret de la capote, située devant le couvercle (7).
